# EUROPEAN PATENT APPLICATION

(11) **EP 2 264 102 A1**
(43) Date of publication of application: **22.12.2010**
(21) Application number: 10166033.0
(22) Date of filing: 15.06.2010
(51) Int. Cl.: C08L 63/02, H01B 3/08, H01B 3/40, H01F 27/32, C08K 3/36, C08L 9/02, C08L 83/04

(54) **Cast insulation resin for electric apparatus and high voltage electric apparatus using the same**

(30) Priority: 17.06.2009 JP 2009144247
(71) Applicant: Hitachi Industrial Equipment Systems Co., Ltd., Chiyoda-ku Tokyo (JP)
(72) Inventor: Ootake, Atsushi, Tokyo 100-8220 (JP); Takeuchi, Ryozo, Tokyo 100-8220 (JP); Kaizu, Tomohiro, Niigata 959-2608 (JP); Takeuchi, Masaki, Niigata 959-2608 (JP)
(74) Representative: Beetz & Partner

(57) **Abstract**

A cast insulation resin for an electric apparatus having an improved fracture toughness is provided. The cast insulation resin for an electric apparatus is a cast insulation resin used in an electric apparatus, comprising at least either a polar fine elastomer particle or a liquid elastomer having a polar molecule dispersed in an epoxy resin, and a filler formed of at least either an inorganic compound or an inorganic compound having a modified surface thereon with an organic compound.

## Description

### CROSS REFERENCE TO RELATED APPLICATIONS

This application claims the foreign priority benefit of Japanese Patent Application No.2009-144247, filed on June 17, 2009 in the Japan Patent Office, the disclosure of which is herein incorporated by reference in its entirety.

### BACKGROUND OF THE INVENTIION

### FIELD OF THE INVENTION

The present invention relates to a cast insulation resin for an electric apparatus including a mold transformer, a switchgear and a motor, and a high voltage electric apparatus using the same.

### DESCRIPTION OF RELATED ART

A transmission and transformation facility is located at each of appropriate places on an electricity network from a power plant to each user. In each transmission and transformation facility, high voltage electric apparatuses including various types of a mold transformer, a switch gear and a motor are provided for opening and closing a high voltage circuit. In these high voltage electric apparatuses, resins (or adhesives) containing a variety of components, composites, and particles have been used to insulate a vacuum valve and a high pressure conductor.

For example, the Japanese Laid-Open Patent Application No. 2004-217862 discloses a heat-resistant adhesive for bonding metallic foil to an electric circuit or bonding a heating plate to a circuit board. The heat-resistant adhesive thus described contains a thermoplastic elastomer dispersed therein as fine particles with an average particle size of 0.01 µm to 10 µm, so as to provide a heat-resistant adhesive having excellent electrical insulation properties and adhesive properties at 150°C.

Further, the Japanese Laid-Open Patent Application No. 2008-75069 discloses a cast resin composition for an insulation product comprising an epoxy compound having two or more epoxy groups in a molecule, a micro particle composed of one or more substances selected from a group including silica, alumina and mullite, an elastomer particle, and a nano particle composed of one or more substances selected from a group including a layered silicate compound, an oxide and a nitride. Herein, an object of the above mentioned patent document is described to provide a cast resin composition that has an adherence property with a molded conductor and a high anti-treeing property. Treeing is a phenomenon in which a damaging process of an insulation material is occurred due to partial discharges and progresses through the less resistant part of the insulation material, of which path resembles the form of a tree.

In general, resins used in a high Voltage electric apparatus need an appropriate strength (fracture toughness) so as not to be easily broken, as well as a non-conductance property.

However, according to the Japanese Laid-Open Patent Application No. 2004-217862, the fracture toughness of the heat-resistant adhesive described therein can not be improved, while the heat-resistant property thereof can be improved.

Further, according to the Japanese Laid-Open Patent Application No. 2008-75069, the fracture toughness of the cast resin composition for an insulation product described therein can not be improved, while the anti-treeing property thereof can be improved.

### SUMMARY OF THE INVENTION

The present invention has been developed to solve the foregoing problems. An object of the present invention is to provide a cast insulation resin for an electric apparatus having an improved fracture toughness, and a high voltage electric apparatus using the same.

Here, the cast insulation resin for an electric apparatus of the present invention, by which the foregoing problems are solved, is a cast insulation resin used in an electric apparatus. The cast insulation resin for an electric apparatus comprises at least either a polar fine elastomer particle or a liquid elastomer having a polar molecule in a dispersed state in an epoxy resin, and a filler that is formed of at least either an inorganic compound or an inorganic compound having a modified surface thereon with an organic molecule. Further, the cast insulation resin for an electric apparatus of the present invention is used in the high voltage electric apparatus of the present invention.

As mentioned above, the cast insulation resin for an electric apparatus of the present invention comprises a polar fine elastomer particle or a liquid elastomer having a polar molecule in a dispersed state in an epoxy resin. Therefore, it is possible to improve the compatibility of the polar fine elastomer particle or the liquid elastomer with the polar epoxy resin having a solubility parameter (SP value) of about 9.7 - 10.9 as a theoretical value. The improved compatibility facilitates the dispersion of the fine elastomer particle or the liquid elastomer contained in the epoxy resin, resulting in the increase of the fracture toughness of the cast insulation resin for an electric apparatus. Further, the filler mainly composed of an inorganic compound simultaneously added to the epoxy resin decreases a linear expansion coefficient of the epoxy resin, resulting in decreasing a difference of the linear expansion coefficient between the filler and the metal to be insulated. Together with the increased strength of the epoxy resin by the addition of the fine elastomer particles, accordingly it is possible to prevent the epoxy resin from cracking.

As mentioned above, the dispersion of the fine elastomer particle or the liquid elastomer is facilitated in the cast insulation resin for an electric apparatus of the present invention. The facilitated dispersion allows the improvement of the fracture toughness of the cast insulation resin. Further, the addition of the filler mainly composed of the inorganic compound allows the cast insulation resin to avoid cracking. Accordingly, it is possible to further improve the fracture toughen of the cast insulation resin.

Therefore, according to the cast insulation resin for an electric apparatus of the present invention, it is possible to keep the strength of the high Voltage electric apparatus even when the amount of the cast insulation resin is reduced, which contributes to miniaturize the apparatus thereof, reduce the weight and elongate the life of the apparatus thereof.

Further, according to the high voltage electric apparatus of the present invention, it is possible to keep the strength thereof by using the cast insulation resin for an electric apparatus of the present invention, which allows miniaturizing the apparatus thereof, reducing the weight and elongating the life of the apparatus thereof.

### BRIEF DESCRIPTION OF THE DRAWINGS

FIG. 1 is a cross-sectional diagram showing the state how the cast insulation resin for an electric apparatus of the present invention is used in a high voltage electric apparatus such as a mold transformer.
FIGS. 2A to 2D are diagrams showing a primary particle of the fine elastomer particle. FIG. 2A shows a primary particle that is added to the resin main component (B). FIG. 2B shows a primary particle that is added to the resin main component (C) . FIG. 2C shows a primary particle that is added to the resin main component (D).
FIG. 3 is a diagram showing the state in which two primary particles of the fine elastomer particle bind each other.
FIG. 4 shows a view of the metallic mold used for producing a test piece by curing the cast insulation resin for an electric apparatus
FIG. 5 shows a schematic diagram showing a shape of the test piece to be used in the three-point bending test and a procedure of the three-point bending test.
FIG. 6 shows a diagram schematically showing a cross-section of the resin main composition (D) observed by the SEM.
FIG. 7 shows a diagram schematically showing a cross-section of the epoxy resin in which fine elastomer particles are dispersed uniformly.
FIG. 8 shows a diagram schematically showing a cross-section of the epoxy resin in which a part of the fine elastomer particles is agglomerated.
FIG. 9 shows an example of the liquid elastomer formed by binding an acid anhydride molecule with the polybutadiene structural skeleton.
FIG. 10 shows a diagram schematically showing the state that the fine elastomer particles of polydimethylsiloxane (or polydimethylsiloxane particles) are dispersed in the epoxy resin.
FIG. 11 is a diagram showing the state that a polar carboxyl group is introduced into a portion of the polysiloxane skeleton molecule.

### DETAILED DESCRIPTION OF THE PREFERRED EMBODIMENT

The cast insulation resin for an electric apparatus of the present invention is a cast insulation resin used in an electric apparatus. The cast insulation resin for an electric apparatus comprises at least either a polar fine elastomer particle or a liquid elastomer having a polar molecule in a dispersed state in an epoxy resin, and a filler that is formed of at least either an inorganic compound or an inorganic compound having a modified surface thereon with an organic molecule.

Here, the epoxy resin is a compound including two and more epoxy groups comprised of two carbon atoms and one oxygen atom in the molecule. Any epoxy compound can be used as long as a ring-opening reaction proceeds with the epoxy compound by an appropriate curing agent to yield a cured resin.

For example, preferably the epoxy resin includes a bisphenol A typed epoxy resin obtained by a condensation of epichlorohydrin with polyphenols such as a bisphenol or a polyalcohol, a bromo bisphenol A typed epoxy resin, a hydrogenated bisphenol A typed epoxy resin, a bisphenol F typed epoxy resin, a bisphenol S typed epoxy resin, a bisphenol AF typed epoxy resin, a biphenyl typed epoxy resin, a naphthalene typed epoxy resin, a fluorine typed epoxy resin, a novolac typed epoxy resin, a phenol novolac typed epoxy resin, an orthocresol novolac typed epoxy resin, a tris (hydroxyphenyl)methan typed epoxy resin, a glycidyl ether typed epoxy resin such as a tetraphenolethan typed epoxy resin, a glycidyl ester typed epoxy resin obtained by a condensation of epichlorohydrin with a carboxylic acid, and a heterocyclic epoxy resin such as a hydantoin typed epoxy resin obtaind by a reaction of triglycidyl isocyanate or epichlorohydrin with hydantoins. Herein, the above mentioned resin can be used alone or as the mixture of two or more different kinds of the resins thereof.

Here, any type of curing agent that is added to cure the epoxy resin can be used as long as the curing agent chemically reacts with the epoxy resin to cure the epoxy resin. The type of the curing agents is not limited. The curing agent includes, for example, an acid anhydride based curing agent, an amine based curing agent, an imidazole based curing agent, and a polymercaptan based curing agent.

The acid anhydride based curing agent includes, for example, dodecenyl succinic anhydride, polyadipinic anhydride, polyazelaic anhydride, poly sebacic anhydride, poly(ethyloctadecanoic diacid) anhydride, poly(phenylhexadecanoic diacid) anhydride, methyl tetrahydrophthalic anhydride, methyl hexahydrophthalic anhydride, methylhymic anhydride, hexyahydrophthalic anhydride, tetrahydrophthalic anhydride, trialkyl tetrahydrophthalic anhydride, methylcyclohexene dicarboxylic anhydride, phthalic anhydride, trimellitic anhydride, pyromellitic anhydride, benzophenonetetracarboxylic acid, ethyleneglycol bistrimellitate, glycerol tristrimellitate, het anhydride, tetrabromophthalic anhydride, nadic anhydride, methynadic anhydride, polyazelaic anhydride.

The amine based curing agent includes, for example, ethylendiamine, 1,3-diaminopropane, 1,4-diaminobutane, hexamethylenediamine, diproprenediamine, polyetherdiamine, 2,5-dimethylhexamethylenediamine, trimethylhexamethylenediamine, diethylenetriamine, iminobispropylamine, bis(hexamethyl)triamine, triethylenetetramine, tetraethylenepentamine, pentaethylenehexamine, aminoethylethanolamine, tri(methylamino)hexane, dimethylaminopropylamine, diethylaminopropylamine, methyliminobispropylamine, mensendiamine, isophoronediamine, bis(4-amino-3-methyldicyclohexyl)methane, diaminodicyclohexylmethane, bis(aminomethyl)cyclohexane, N-aminoethylpiperazine, 3,9-bis(3-aminopropyl)2,4,8,10-tetraoxaspiro(5,5)undecane, m-xylenediamine, methaphenylenediamine, diaminodiphenylmethane, diaminodiphenylsulfone, diaminodiethyldiphenylmethane, dicyandiamide, and organic acid dihydrazide.

The imidazole based curing agent includes, for example, 2-methylimidazole, 2-ethyl-4-methylimidazole, 2-heptadecylimidazole.

Further, the polymercaptane based curing agent includes, for example, polysulfide and thioester.

Other curing agents include a phenol based curing agent, a Lewis acid based curing agent, and an isocyanate based curing agent.

Moreover, combining with the epoxy compound curing agent, a curing accelerator for the epoxy compound which accelerates or controls the curing reaction of the epoxy compound may be added. Particularly, when an acid anhydride based curing agent is added, the curing accelerator for the epoxy compound is usually used since the curing reaction of the acid anhydride curing agent is slower than other curing agents such as an amine based curing agent. The curing accelerator for the epoxy compound includes a tertiary amine or the salt thereof, a quarterly ammonium compound, imidazole, and an alkaline metal alkoxide.

The fine elastomer particle provides the epoxy resin with flexibility and stress-relaxation properties after curing treatment thereof, resulting in improving the fracture toughness of the epoxy resin. For that reason, a rubber material which facilitates the deformation and fluidization at an ambient temperature is preferably used as the fine elastomer particle.

Meanwhile, the epoxy resin is a highly polymerized polar compound. Accordingly, if the fine elastomer particle is not a material compatible with the epoxy resin, problems such as poor dispersion of fine elastomer particles and bleeding out can be occurred, which leads to the insufficient improvement of the fracture toughness of the epoxy resin.

Therefore, it is needed to provide the fine elastomer particle with polarity in order to make the fine elastomer particle compatible with the epoxy resin.

Preferably, the polar fine elastomer particle includes, for example, an element with the Pauling electronegativity of 2.56 and more in the molecule. Many elastomers are compounds including carbon having the Pauling electronegativity of 2.55. Therefore, when the element having the electronegativity with 2.55 and more is bound to carbon, the electrons of the carbon atom are attracted to the element having the higher electronegativity than the carbon. Thus, the binding causes the electrical polarity to provide the molecular polarity. Hereby, it is possible to provide the fine elastomer particle with polarity. As mentioned above, since the epoxy resin is a highly polymerized compound having a relatively higher polarity, it is possible to improve the dispersion of the fine elastomer particles by providing the fine elastomer particles with polarity. The element having the Pauling electronegativity of 2.56 and more includes N, O, F, S, Cl, Br, I, Kr, and Xe.

Alternatively, the fine elastomer particle may have a polar group in the molecule thereof, or a part of the molecule of the fine elastomer particle may be modified by a polar group, so as to provide the fine elastomer particle with polarity.

For example, at least either the surface or the inside of the fine elastomer particle includes at least one group selected from a cyano group, an acryl group, an acid anhydride group, and a methacryl group. These substituent groups are polar groups. Therefore, the introduction of the substituent groups enables the fine elastomer particles to be improvedly dispersed in the epoxy resin.

Preferably, the fine elastomer particle is formed of a rubber having at least either a polybutadiene skeleton or a polysiloxane skeleton. Herein, a part of the molecule of the polybutadiene skeleton and a part of the molecule of the polysiloxane skeleton are preferably modified by at least either a carboxyl group or an acid anhydride group.

Specifically, the fine elastomer particle is made of preferably at least either a nitrilebutadiene rubber or a cross-linked nitrile butadiene rubber. Herein, at least either the surface or the inside of the fine elastomer particle is preferably modified by at least either a carboxyl group or an acid anhydride group.

A butadiene based rubber having a polybutadiene rubber such as a nitrilebutadiene rubber and a cross-linked nitrile butadiene rubber is a cheap material. Therefore, it is possible to reduce the manufacturing cost. Here, generally the butadiene based rubber has poor heatproof and weatherproof properties. For the complement of the poor properties, it is possible to introduce or add a rubber having a polysiloxane skeleton into the molecule to improve the heatproof and weatherproof properties of the butadiene based rubber. Further, it is possible to introduce a carboxyl group or an acid anhydride group into the molecule to improve the dispersion of the particles.

Herein, a nitrilebutadiene rubber may be used by replacing a part of the rubber having the polysiloxane skeleton since the rubber having the polysiloxane skeleton is a relatively expensive material.

The fine elastomer particle of the present invention is not limited to the material as mentioned above. For example, the fine elastomer particle of the present invention can be formed of an acryl based elastomer, a fluorine based elastomer, a vinyl chloride based elastomer, an olefin based elastomer, a styrene based elastomer, a urethane based elastomer, a polyester based elastomer, and a polyamide based elastomer. Preferably, the above mentioned elastomer includes a butadiene polymer rubber, a butadiene copolymer rubber, a styrene rubber, an acryl rubber, a silicone rubber, and a polyolefin, and a mixture thereof. The butadiene copolymer rubber includes a butadiene-styrene copolymer rubber, a styrene-butadiene-styrene rubber, a butadiene-isoprene copolymer rubber, an isoprene-butadiene-isoprene copolymer rubber and a butadiene-acrylonitrile copolymer rubber. Herein, the above mentioned mixture includes a product obtained by synthesizing other elastomers in the presence of the elastomers selected from the above mentioned elastomers. Further, a product having a rubber property can be used, which is obtained by polymerizing acrylonitrile, styrene or the mixture thereof using the above mentioned elastomers as a core material.

Preferably, the average particle size of the fine elastomer particle is 2 - 2000 nm, more preferably 25 - 300 nm. The added amount of the fine elastomer particle is preferably in 0.05-20 wt% of the total weight of the cast insulation resin for an electric apparatus. When the average particle size and the added amount of the fine elastomer particle are set in the particular range as mentioned above, it is possible to appropriately decrease the Viscosity of the cast insulation resin for an electric apparatus before the curing treatment, and also to improve the fracture toughness of the cast insulation resin. However, when the average particle size of the fine elastomer particle is too large, the resulting effect becomes small compared to the rate of the added amount of the fine elastomer particle. Accordingly, it is needed to make the fine elastomer particle have an appropriate average particle size. Furthermore, when the added amount of the fine elastomer is too large, the various properties of the cast insulation resin for an electric apparatus become poor. In particular, the Viscosity of the cast insulation resin before the curing treatment thereof extremely increases, resulting in the significant decrease of the operational efficiency.

Further, preferably the fine elastomer particles are uniformly dispersed in the resin. Specifically, the rate that the fine elastomer particles contact each other is preferably 20% or less of the total amount of the fine elastomer contained.

When the rate that the fine elastomer particles contact each other is 20% or more of the total contained amount of the fine elastomer, it is impossible to sufficiently improve the fracture toughness of the resin.

The rate that the fine elastomer particles contact each other can be determined by a scanning electron microscope (SEM) or a transmission electron microscope (TEM).

Preferably, the liquid elastomer has a polybutadiene skeleton, and the polar molecule of the liquid elastomer has an epoxy group or an acid anhydride group.

Here, by using the liquid elastomer, it is possible not to largely increase the viscosity of the cast insulation resin for an electric apparatus before the curing treatment thereof, even though a relatively large amount of the liquid elastomer is added. Accordingly, it is possible to improve the fracture toughness of the cast insulation resin for an electric apparatus and avoid the poor operational performance. Further, the cost reduction can be achieved due to a low price of the butadiene rubber and styrenebutadiene rubber.

The liquid elastomer having the polybutadiene skeleton includes a butadiene rubber, a styrenebutadiene rubber, and an elastomer having a polysiloxane skeleton.

However, the liquid elastomer having no polarity or low polarity is not suitable to use, such as a polybutadiene liquid elastomer or a styrenebutadiene liquid elastomer in which a part of polybutadiene is substituted with styrene. The above mentioned liquid elastomer sometimes causes agglomeration at the curing process with an epoxy compound and a breeding-out phenomenon. Meanwhile, if an epoxy group or an acid anhydride group is introduced into the molecule of the liquid elastomer, the liquid elastomer has enough polarity to be used.

That is, when the polar molecule of the liquid elastomer has an epoxy group or an acid anhydride group, it is possible to increase the solubility parameter (SP value) of the liquid elastomer, even if a rubber having low polarity such as a butadiene rubber and a styrenebutadiene rubber (the theoretical SP values thereof are about 7-8) is used. Hereby, the compatibility of the liquid elastomer with the epoxy resin can be improved.
Further, through the reaction of the epoxy resin with an epoxy group or an acid anhydride group, more stable fixing can be provided with the cast insulation resin for an electric apparatus.

An inorganic compound that is a main component of the filler is preferably at least either silica or alumina, having an average particle size of 500µm or less. The added amount of the inorganic compound is preferably in less than 85 wt% of the total weight of the cast insulation resin for an electric apparatus.

Accordingly, it is possible to decrease the price and the linear expansion coefficient of the resin and increase the thermal conductivity of the resin, and further reduce the viscosity of the resin to a degree capable of performing the casting process. Herein, the inorganic compound is described as a particle. The shape of the particle is not necessarily spherical. The particle of the inorganic compound may be square shaped produced by only crushing the raw material thereof.

Here, the particles with the average particle size of 500µM and more are not preferable because such particles are easily agglomerated to cause the precipitation. Meanwhile, preferably the inorganic compound has an average particle size of 1µm and more. The above mentioned particle size ensures the effects on decreasing the price and the linear expansion coefficient of the resin and increasing the thermal conductivity of the resin, and further reducing the viscosity of the resin to a degree capable of performing the casting process.

Moreover, when the added amount of the inorganic compound is in 85wt% and more of the total weight of the cast insulation resin for an electric apparatus, the agglomeration and increase of the viscosity are caused. Thereby such added amount is not preferable.

The organic molecule modifying the surface of the inorganic compound comprises preferably at least one group selected from a functional group formed of hydrocarbon such as an alkyl group, an acryl group, a methacryl group, a hydroxyl group, an acid anhydride group, and a carboxyl group. Preferably the organic molecule for the modification is selected corresponding to the polarity of the added fine elastomer particle material. For example, when a fine elastomer particle having a markedly increased polarity is used, the less polar hydrocarbon based modification using an alkyl group and a phenyl group is desirable so as to avoid the adsorption to the surface of the inorganic compound.

Accordingly, it is possible to increase the stability of the inorganic compound in the epoxy resin, by modifying the surface of the inorganic compound using one of the functional groups selected from the above mentioned groups and the combination thereof. Note when the surface of the inorganic compound is modified by an alkyl group, it is possible to make the surface of the inorganic compound hydrophobic, allowing the rate that the fine elastomer particles contact each other to be decreased.

The cast insulation resin for an electric apparatus of the present invention may be prepared by adding a layered clay compound, a layered mica, and a super fine silica as a substance contained in the cast insulation resin for an electric apparatus, in addition to a fine elastomer particle and an inorganic compound.

Hereby, it is possible to improve the fracture toughness and electric property of the resin by adding a trace of the layered clay compound, the layered mica, and the super fine silica as finely dispersed. Note it is not needed to add a large amount of the above mentioned additive due to the difficulty in dispersing the additive resulting from the nm order super fine structure of the mono layer, and the expensive price resulting from the necessity of replacing the alkaline metal between the layers with an organic compound.

The layered clay compound is preferably a compound in which a cationic ion between layers in the clay mineral such as montmorillonite is replaced by the alkylanmonium cation. In the many layered clay compounds, a cationic ion such as an Na ion is present between the layers, making the state of the layered clay compound greatly hydrophilic (that is high polarity).
Accordingly, it is sometimes difficult to perform solving and dispersing the layered clay compound in the epoxy resin having not so high polarity. In such a case, the polarity of the layered clay compound may be decreased by replacing the cationic ion between the layers of the layered clay compound with an alkylanmonium cation. Note there is a case that the polarity of the layered clay compound is too much decreased by replacing the cationic ion between the layers of the layered clay compound with an alkylanmonium cation. In that case, a polar group (that is, hydrophilic group) may be introduced to a part of the alkyl group of the alkylanmonium cation. This introduction allows the solubility parameter of the alkylanmonium cation to be almost equal to that of the epoxy resin, resulting in the increase of the compatibility with the epoxy resin. Therefore, it is possible to sufficiently and uniformly disperse the layered clay compound in the epoxy resin. The same modification can be applied to the layered mica.

Here, prices of the layered clay compound and the layered mica tend to be expensive due to the necessity of additional treatments such as an ion replacing treatment. However, note that silica (super fine silica) having a primary particle size of about 10 nm can be used together with the layered clay compound and the layered mica so as to improve the fracture toughness and the electric property of the resin. Accordingly, the amounts of the layered clay compound and the layered mica can be reduced.

The cast insulation resin for an electric apparatus of the present invention may include an additive such as an anti-sagging agent, an anti-setting agent, a deforming agent, a leveling agent a slipping agent, a dispersing agent and a substrate wetting agent in the range without inhibiting the desired effects of the present invention.

The cast insulation resin for an electric apparatus of the present invention is produced as mentioned below, using the respective materials described hereinbefore. First, with applying at least either a shear force or an expansion force to the materials mentioned below, are mixed at least either the fine elastomer particle or the liquid elastomer having the polar molecule, and the filler made of the inorganic compound as a main component. Herein, if needed, at least one compound selected from the layered clay compound, the layered mica, and the super fine silica may be further added. Further, the application of at least either a shear force or an expansion force enables the uniform dispersion of the fine elastomer particles and the liquid elastomer in the epoxy resin.

Preferably, a rotation and revolution type stirrer can be used as a mixer. A variety of mixers can be used as long as the mixers can mix the materials with applying a shear force and an expansion force thereto. For example, a bead mill mixer, a 3 roll mill mixer, a homogenizer mixer, and a resin mixer with mixing wings can be used.

The cast insulation resin for an electric apparatus of the present invention thus prepared is used in a place requiring the insulation of a high voltage electric apparatus such as a mold transformer, a switch gear, and a motor. The curing treatment of the cast insulation resin produces the cast insulation resin cured product for an electric apparatus having the insulation property.

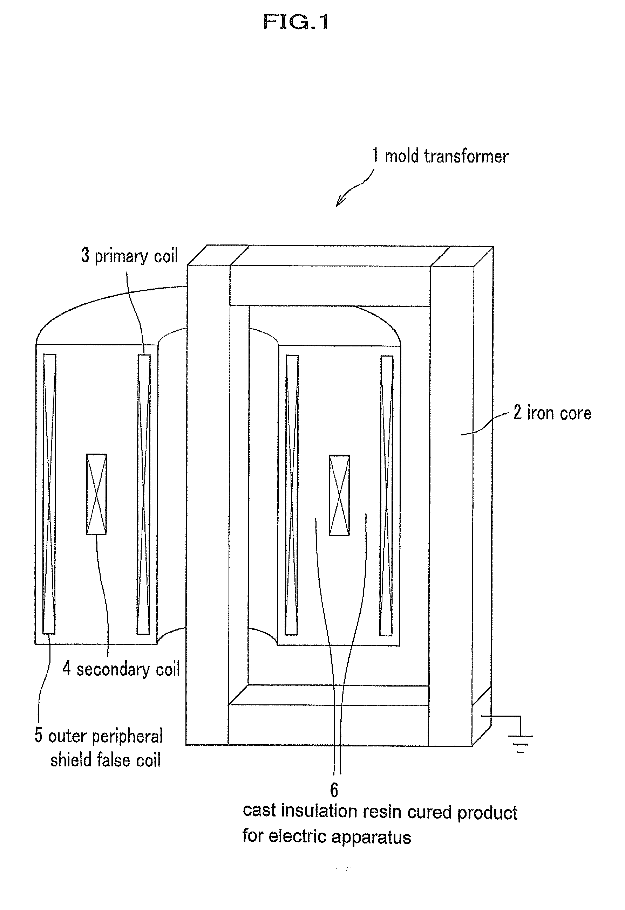

Next, the examples will be described in which the cast insulation resin for an electric apparatus of the present invention is used in the mold transformer. As shown in FIG.1, the mold transformer 1 comprises an iron core 2, a primary coil 3 having a low voltage wound around the iron core 2, a secondary coil 4 having a higher voltage than the primary coil 3, the secondary coil 4 being provided at the external side of the primary coil 3, and an outer peripheral shield false coil 5 provided at the external side of the secondary coil 4. Further, the primary coil 3, the secondary coil 4, and the outer peripheral shield false coil 5 are integrally resin-molded by the cast insulation resin cured product for an electric apparatus 6 that is produced by curing the cast insulation resin for an electric apparatus of the present invention. Note that the outer peripheral shield false coil 5 is grounded at an edge of the secondary coil 4 through the cast insulation resin cured product for an electric apparatus 6. The above arrangement of the mold transformer 1 can improve the fracture toughness to thereby increase the strength, since the cast insulation resin cured product for an electric apparatus 6 is used, which is produced by curing the cast insulation resin for an electric apparatus of the present invention. Accordingly, it is possible to miniaturize the mold transformer 1, reduce the weight and elongate the life of the mold transformer 1. Moreover, it is possible to keep the reliability of the mold transformer 1 over a long period without causing partial discharges in the mold transformer 1 due to the insulating property of the cast insulation resin cured product for an electric apparatus 6, enabling a long period of the operation. Furthermore, it is possible to use the mold transformer 1 at higher voltages than conventional transformers, although the mold transformer 1 has the same size as the conventional transformers.

### EXAMPLE

Next, the examples will be described in which the effects of the present invention were determined.

### (Example 1)

In Example 1, an cast insulation resin for an electric apparatus was prepared by using the materials and the added amounts shown in Table 1 to determine the effect of the fine elastomer particle.

Table 1 shows a kind of the material included in the main resin component and the added amount thereof. The epoxy resin in Table 1 has a typical bisphenol A structure, having two epoxy groups in one monomer molecule. As an inorganic compound, a large amount (450 parts by weight) of crushed silica (average particle size: 50 µm) was used. Further, aluminum hydroxide was added in about 5 parts by weight as an additional agent such as an anti-setting agent. Table 1 also shows a curing agent. Phthalic anhydride was used as the acid anhydride.

**Table 1**

| Additive | | State | Component | Parts by weight |
|---|---|---|---|---|
| Resin main component | Epoxy resin | Liquid | Bisphenol A | 100 |
| | Silica | Crushed particles (average particle size: 50µm) | Particle without surface modification | 450 |
| | Others | - | - | 5 |
| Curing agent | | Liquid | Acid anhydride | 90 |

Next, three types of the fine elastomer particles of Table 2 to be added to the resin main components of Table 1 were prepared. Herein, the resin main components (A) to (D) were prepared with or without adding the fine elastomer particles thereto.

In Example 1, each of the fracture toughness of the cured resin products which were obtained by curing the resin components (A) to (D) through the addition of the curing agent of Table 1 was evaluated. Table 2 shows the type of the fine elastomer particle to be added to the respective resin main components.

**Table 2**

| Sample | Fine elastomer particle | Surface modification | Average particle size | Parts by weight |
|---|---|---|---|---|
| Resin main component (A) | None | None | - | - |
| Resin main component (B) | Butadiene rubber | None | 50 - 100nm | 15 |
| Resin main component (C) | Cross-linked nitrilebuatdiene rubber | None | 50 -100nm | 15 |
| Resin main component (D) | Cross-linked nitrilebuatdiene rubber | Carboxyl group introduction | 50 - 100nm | 15 |

As shown in Table 2, the resin main component (A) was a standard sample to which no fine elastomer particle was added. Here, the resin main component (B) was a sample to which a butadiene rubber was added. The resin main component (C) was a sample to which a cross-linked nitrilebutadiene rubber was added. The resin main component (D) was a sample to which a cross-linked nitrilebutadiene rubber whose surface was modified by a carboxyl group was added.

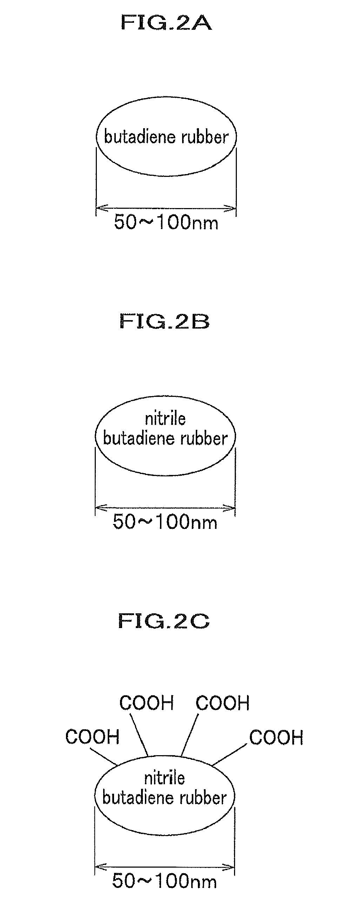

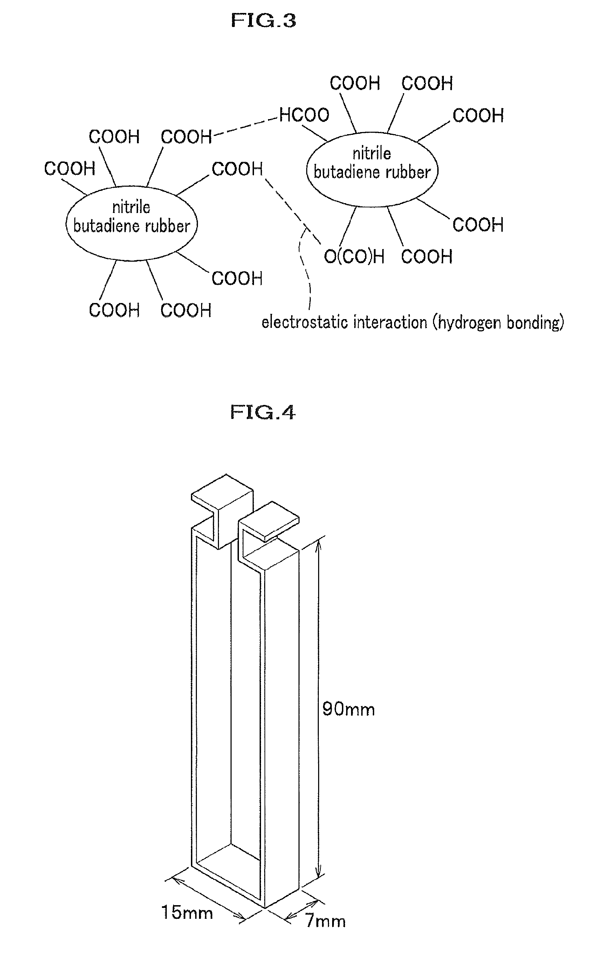

The fine elastomer particle was added to the sample so that the added amount of the fine elastomer particle was in 15 parts by weight of the total weight of the sample including the weight of the resin main component as prepared in Table 1. The particle size of the respective fine elastomer particles was in a range between about 50 and 100 nm. FIGS. 2A to 2C show the primary particle of the fine elastomer particle. Particularly, when the surface of the primary particle is modified to be hydrophilic by the carboxyl group, the surfaces of the particles are bound each other through the electrostatic interaction (such as hydrogen binding) as shown in FIG. 3. Here, FIG. 3 shows the example of the particles of the cross-linked butadiene rubber whose surface is modified by carboxyl groups. The energy of the above mentioned binding is around several kcal/mol per one binding, which is lower by one order than the covalent binding energy. However, the fine particles have a greatly large specific surface area and the increased number of the bindings, resulting in the increase of the total avidity. Therefore, the materials were mixed by a rotation and evolution type stirrer so as to separate the particles bound each other and disperse the particles in the resin.

The test pieces made by curing the resin main components (A) to (D) were prepared as mentioned below. First, the epoxy resin and the curing agent were placed in the separated vessels, heated at 80 °C, and silica and the anti-setting agent were added to the epoxy resin, thereby to prepare the respective resin main components.

Next as shown in Table 2, the respective fine elastomer particles were added to the solution of the resin main component, and the solution was stirred by the rotation and evolution type stirrer. Then, it was determined that the fine elastomer particles were uniformly dispersed in the resin main component, to provide the main resin components (A) to (D).

Next, the heated curing agent was added to the main resin components (A) to (D) thus prepared.

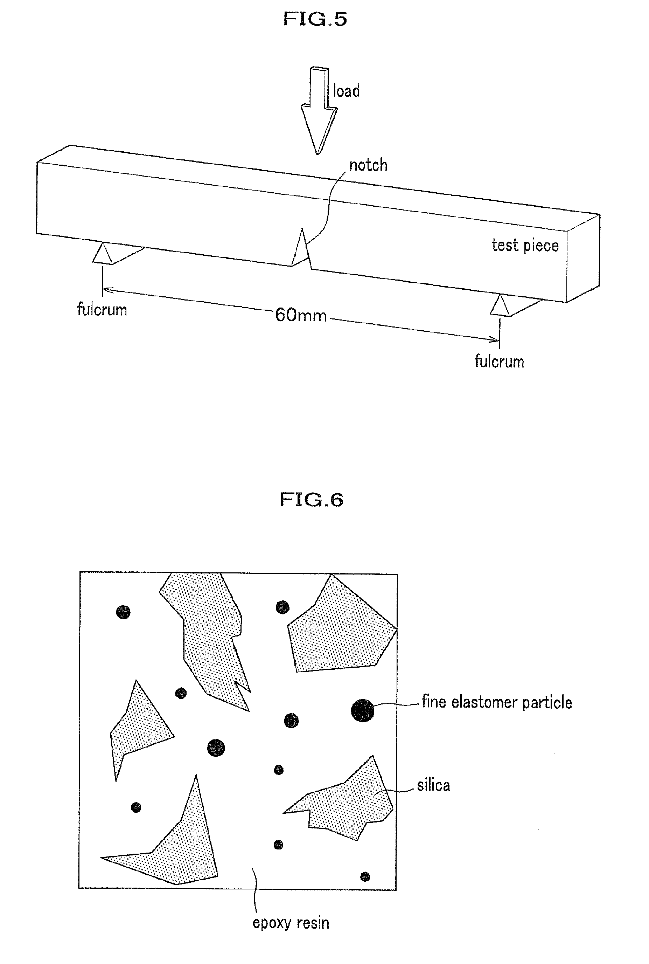

The main resin components (A) to (D) to which the curing agent was added were separately poured into the metallic mold having the shape of FIG. 4 with maintaining the temperature. The molding temperature was kept at 80°C for 8 hr and 140°C for 12 hr for curing the resin. The cured product was cooled at ambient temperature for 5 hr and removed from the mold to provide a test piece shown in FIG. 5.

Next, a fracture toughness value (K1c) of the test piece was measured by applying a load thereto until the test piece was broken in the three-point bending test using the test piece thus prepared in compliance with ASTM D5045 (referring to FIG. 5). Here, Table 3 shows the relative values of the fracture toughness (K1c) of the test pieces prepared by curing the resin main component (A). In Table 3, "the phase separation state" denotes the state of the mixture after the fine elastomer particle was added to the resin main component and the mixture was stirred. When the mixture was visibly observed to be apparently separated to two phases, the separation state was describe as "separated", while when not observed, the separation state was described as "not separated".

**Table 3.**

| Sample | Fine elastomer particle | Phase separation state | Fracture toughness* (relative value) |
|---|---|---|---|
| Resin main component (A) | None | - | 1 |
| Resin main component (B) | Butadiene rubber | Separated | 0.9 |
| Resin main component (C) | Cross-linked nitrilebuatdiene rubber | Not separated | 1.2 |
| Resin main component (D) | Cross-linked nitrilebuatdiene rubber | Not separated | 1.4 |

| | | | |
|---|---|---|---|
| ^{*}Fracture toughness (K1c): relative value to the fracture toughness of the test piece made by curing the resin main component (A). | | | |

The results of Table 3 show the following findings. That is, when the fine elastomer particles of the butadiene rubber were mixed to the resin main component and the curing process was conducted, the mixture was separated to two phases during the curing process. One of the phases included many fine elastomer particles of the butadiene rubber, while the other phase included few fine elastomer particles. Further, the fracture toughness of the resin to which the fine elastomer particles were added was lower than the fracture toughness of the resin to which no fine elastomer particle was added.

In contrast, when the fine elastomer particles of the cross-linked nitrilebutadiene rubber were mixed to the resin main component and the curing process was conducted, the phase separation was not observed and the fracture toughness of the resin was improved (referring to the resin main component (C)). Moreover, when the fine elastomer particles of the cross-linked nitrilebutadiene rubber having the surface modified with the carboxyl group were mixed to the resin main component and the curing process was conducted, the fracture of the toughness of the resin was further improved (referring to the resin main component (D)). Accordingly, the resin main component (C) and the resin main component (D) are shown to be the preferable examples achieving the desired effects of the present invention.

The above mentioned findings show that the polarity of the fine elastomer particle plays a very important role in dispersing the particle in the epoxy resin. This dispersion effect was significantly observed especially when the fine elastomer particle having a several tens nanometer size was used.

Next, the inside state of the resin main component (D) was observed by the transmission electron microscope (TEM) and the scanning electron microscope (SEM). FIG. 6 schematically shows the result. As shown in FIG. 6, the fine elastomer particles were dispersed between the crushed particles of silica. Herein, the mechanism on the improvement of the fracture toughness caused by the addition of the fine elastomer particles is not clear, although several documents have described the mechanism. Generally, it is known that the fracture toughness of the resin is improved when the fine elastomer particles are uniformly dispersed rather than when the fine elastomer particles are agglomerated. In Example 1, polar fine elastomer particles were used so as to make the particles dispersed uniformly in the polar epoxy resin. Thus, it is assumed that the use of the polar particles provides the effect of the uniform dispersion. The same effect is assumed to be also observed in the fine elastomer particle in which cyano groups are introduced into the molecule of the butadiene rubber of Example 1 (or nitrilebutadiene rubber), and also in another fine elastomer particle in which acryl groups, acid anhydride groups or methacryl groups are introduced. More detail discussion will be described in Example 2 hereinafter.

Next, the sample piece imitating the insulation resin of the mold transformer was tested to determine how much amount of the resin could be reduced with crack-free by using the resin main component (D) as a material. As a result, the crack-free effect was achieved even when 20% of the total weight of the insulation resin was reduced. The above result demonstrates that it is possible to miniaturize the product and reduce the weight of the product.

### (Example 2)

In Example 2, the fine elastomer particles were used, comprising the nitrilebutadiene rubber and the nitrilebutadiene rubber whose surface was modified by carboxyl groups. The fracture toughness was measured in the same method as Example 1. The relative value of the fracture toughness (K1c) of Example 2 to the fracture toughness of the test piece made by curing the resin main component (A) was about 2. Here, "N" contained in the nitrilebutadiene rubber has a Pauling electronegativity of 3.04, and "O" has the value of 3.44. Both values are higher than that of "C" with 2.55, resulting in providing the higher polarity with the cyano and carboxyl groups in the molecule. Accordingly, it is strongly suggested that the same effect as Example 1 can be obtained by introducing the acryl group, the acid anhydride group and the methacryl group as mentioned above. Here, Table 4 shows the Pauling electronegativity of the respective elements. It is assumed that the same effect more or less can be achieved by introducing any of the elements having the Pauling electronegativity with 2.56 and more listed in Table 4 into the molecule of the fine elastomer particle.

**Table 4**

| Element | Pauling electronegativity |
|---|---|
| B | 2.04 |
| C | 2.55 |
| N | 3.04 |
| O | 3.44 |
| F | 3.98 |
| S | 2.58 |
| Cl | 3.16 |
| Br | 2.96 |
| I | 2.66 |

### (Example 3)

The linear expansion coefficient was decreased by blending the crushed silica product in the resin main component through the same procedure as Example 1. Hereby, the linear expansion coefficient of the epoxy resin made of bisphenol A (that is resin main component (A)) was decreased to between 20 x 10⁻⁶ /K and 30 x 10⁻⁶ /K by the addition of silica, while the linear expansion coefficient of the epoxy resin made of bisphenol A to which no silica was added was about 60 x 10⁻⁶ /K (referring to Example 3). Accordingly, the linear expansion coefficient of the resin became close to that of the metallic material such as aluminum and copper. Therefore, the addition of silica enables to prevent the insulation resin for an electric apparatus from cracking, in addition to the improvement of the fractural toughness of the resin caused by the addition of the fine elastomer particle.

### (Example 4)

In Example 4, the surface of the inorganic compound added to the epoxy resin (or resin main component (A)) was modified so that the surface had hydroxyl groups. The relative value of the fracture toughness (K1c) of Example 4 to the fracture toughness of the test piece made by curing the resin main component (A) was about 1.5. The result strongly suggests that the same effect can be achieved when the surface of the inorganic compound is modified by any of the group selected from a hydrocarbon group such as an alkyl group, an acryl group, a methacryl group, an acid anhydride group, a carboxyl group, and an alkoxyl group, and the combination thereof.

### (Example 5)

In Example 5, the fine elastomer particle having an average particle size of about 100nm was used as a material. The relative value of the fracture toughness (K1c) of Example 5 to the fracture toughness of the test piece made by curing the resin main component (A) was about 1.6. Accordingly, it was confirmed that the same effect was achieved as the resin main component (D) of Example 1.

### (Example 6)

In Example 6, it was determined whether there was a difference or not between the states with and without the agglomeration of the fine elastomer particles. Here, the state without the agglomeration was prepared by sufficiently stirring the resin main component after adding the fine elastomer particles thereto, while the state with the agglomeration was prepared by the insufficient stirring.

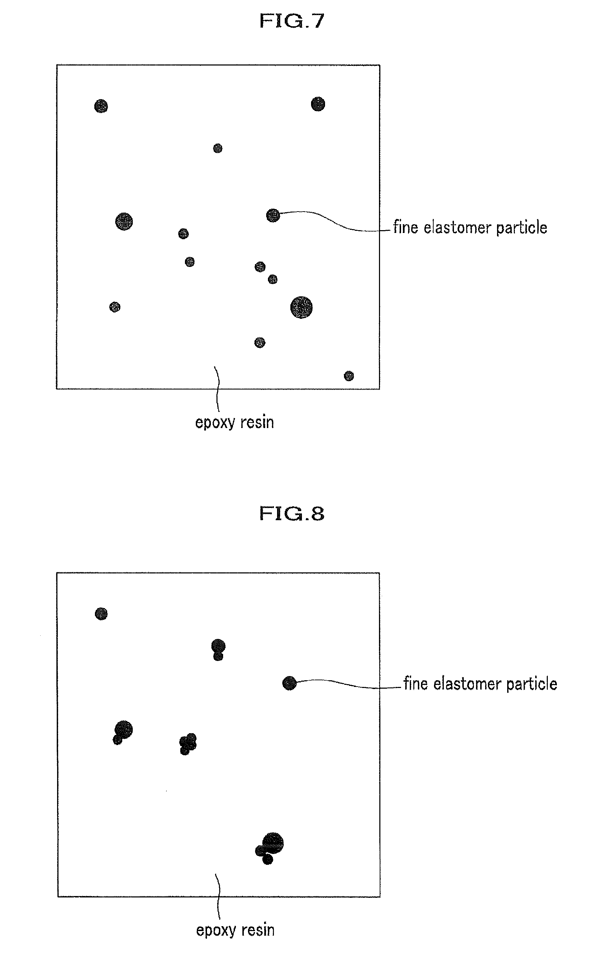

As a result, when the fine elastomer particles were uniformly dispersed to cause no agglomeration as shown in FIG. 7, the fracture toughness of the resin was improved. Herein, the relative value of the fracture toughness (K1c) of the resin to the fracture toughness of the test piece made by curing the resin main component (A) was about 1.6.

In contrast, when the fine elastomer particles were not uniformly dispersed to cause the agglomeration as shown in FIG. 8, the fracture toughness of the resin was not improved. Herein, the relative value of the fracture toughness (K1c) of the resin to the fracture toughness of the test piece made by curing the resin main component (A) was about 1.1.

According to the investigation of the inventors, it was determined that the effect on the improvement of the fracture toughness of the resin was significantly decreased to the degree of 50% and less, when the agglomeration was caused in 20% and more of the fine elastomer particles. The number of the agglomerated fine elastomer particles was counted based on the TEM image obtained by imaging the fine elastomer particles in the resin by TEM.

### (Example 7)

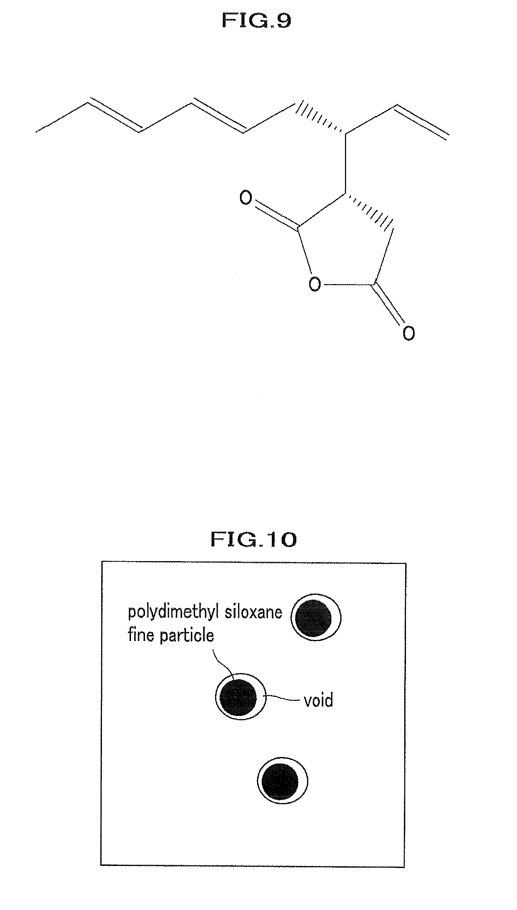

In Example 7, the liquid elastomer was used instead of the fine elastomer particle: the liquid elastomer including a molecule having a molecular weight of about 3000 and a polybutadiene skeleton in which a vinyl group was included (as shown in FIG. 9).

First, the above mentioned liquid elastomer and silica of Table 1 were added to the epoxy resin (or the resin main component) of Table 1, and the materials were mixed with the same conditions and procedure as Example 1. Then, the curing agent was added to the mixture and the resulting mixture was casted into the mold of FIG. 4 and cured to prepare the test piece. The prepared test piece was used to measure the fracture toughness thereof in the same procedure as Example 1.

As a result, when the liquid elastomer was added in 10 parts by weight, the fracture toughness of the resin was improved in about a 15% degree compared to the fracture toughness of the resin to which no liquid elastomer was added (that is, the resin main component (A) of Example 1).

Meanwhile, the relative value of the fracture toughness (K1c) of the resin to the fracture toughness of the test piece made by curing the resin main component (A) was about 1.6, when a large amount of the silica without the modified surface was added (60 parts by weight) with the conditions of Example 7. Accordingly, it was determined that the fracture toughness of the resin was improved in the above case.

Here, the observation through SEM and TEM demonstrated that spherical shaped elastomer particles with around a 100 nm particle size were formed in the cured resin with the conditions of Example 7. Accordingly, it is assumed that the formation of the spherical shaped elastomer particles resulted in the improvement of the fracture toughness of the resin.

### (Example 8)

In Examples 1 to 7, it has been described that the fine elastomer particles of the nitrilebutadiene rubber were mainly used. In general, the heat-resistant and electric properties of the nitrilebutadiene rubber are not excellent. Therefore, it is assumed that a problem could be caused on the heat-resistant and electric properties associating with the increase in the amount of the added fine elastomer particles of the nitrilebutadiene rubber.

For that reason, the fine elastomer particle comprising the elastomer having the excellent heat-resistant and electric properties was evaluated. The elastomer includes a siloxane bond (or -Si-O-Si- structure), that is, a polysiloxane skeleton.

Usually, the fine elastomer particle of polydimethylsiloxane has a surface with an increased hydrophobicity, resulting in a poor adhesive property of the particle with the epoxy resin having an increased polarity. Accordingly, a void is formed between the epoxy resin and the fine elastomer particle of polydimethylsiloxane (or polydimethylsiloxane fine particle) as shown in FIG. 10. The formation of the void is not preferable because the void promotes the destruction of the cured resin, causing a crack of the cured resin.

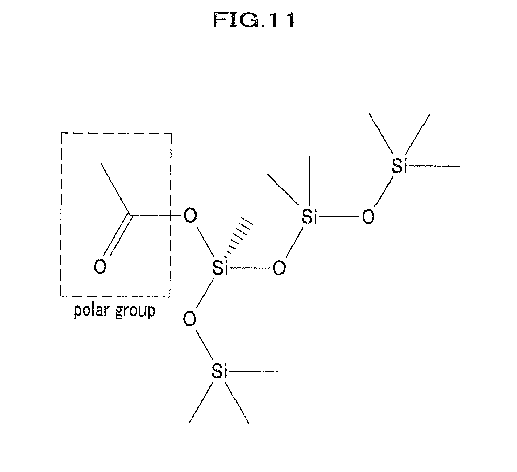

Therefore, in Example 8, a polar carboxyl group was introduced into the molecule having the polysiloxane skeleton as shown in FIG. 11 in order to improve the adhesive property of the fine elastomer particle with the epoxy resin and the fracture toughness thereof. As a result, the relative value of the fracture toughness (K1c) of Example 8 to the fracture toughness of the test piece made by curing the resin main component (A) of Example 1 was about 1.5. Thus, the improvement of the fracture toughness was confirmed. Herein, the elastomer having the polysiloxane skeleton was used in Example 8. Taking the polysiloxane property into consideration, it is strongly suggested that the heat-resistant and electric properties of the resin comprising such elastomer with the polysiloxane skeleton were also improved compared to those of the resin comprising the fine elastomer particles of the nitrilebutadiene rubber.

### (Example 9)

In Example 9, the test was further conducted to achieve more improvement of the fracture toughness of the resin with the excellent electric property, in the cast insulation resin for an electric apparatus.

The test piece of Example 9 was prepared with the same procedure and conditions of Example 1, by adding montmorillonite (3.5 parts by weight) of the layered clay compound to the resin main component of Tables 1 and 2, and curing the resin through the addition of the curing agent of Table 1 thereby to prepare the test piece in the same procedure as described in Example 1.

The prepared test piece was used to measure the fracture toughness value (K1c) in the same procedure as described in Example 1.

Further, the test piece made by curing the resin main component (A) and the test piece prepared in Example 9 were used to measure the electric properties thereof complying with the power standards A-216.

As a result, the relative value of the fracture toughness (K1c) of the test piece in Example 9 to the fracture toughness of the test piece made by curing the resin main component (A) was about 1.5. Further, the electric properties such as the insulating property of the test piece were also improved.

Accordingly, it is apparent that remarkable effects on purification of the exhaust gas at a high efficiency are admitted, removing the nitrogen oxide in a wide range of a temperature initiated from a low temperature by the exhaust purification apparatus for an internal combustion engine and the methods for purifying the exhaust gas of the present invention. The effects are clearly shown in the results of the evaluation tests described hereinbefore, particularly, in the results obtained by comparison of Example 1 with Comparative Example 1 (or Comparative Example 2).

The above embodiments of the invention as well as the appended claims and figures show multiple characterizing features of the invention in specific combinations. The skilled person will easily be able to consider further combinations or sub-combinations of these features in order to adapt the invention as defined in the in the claims to his specific needs.

## Claims

1. A cast insulation resin for an electric apparatus which is used in the electric apparatus, comprising:
at least either a polar fine elastomer particle or a liquid elastomer having a polar molecule dispersed in an epoxy resin, and
a filler formed of at least either an inorganic compound or an inorganic compound having a modified surface thereon with an organic compound.

2. The cast insulation resin for an electric apparatus according to claim 1, wherein the molecule of the fine elastomer particle includes an element having a Pauling electronegativity of 2.56 and more.

3. The cast insulation resin for an electric apparatus according to claim 1 or 2, wherein at least either a surface or an inside of the fine elastomer particle includes at least one group selected from a cyano group, an acryl group, an acid anhydride group, and a methacryl group.

4. The cast insulation resin for an electric apparatus according to one of claims 1 - 3, wherein
the fine elastomer particle is formed of a rubber including at least either a polybutadiene skeleton or a polysiloxane skeleton, and
a part of a molecule having the polybutadiene skeleton and a part of a molecule having the polysiloxane skeleton are modified with at least either a carboxyl group or an acid anhydride group.

5. The cast insulation resin for an electric apparatus according to claim 1, wherein
the fine elastomer particle is at least either a nitrilebutadiene rubber or a cross-linked nitrilebutadiene rubber, and
at least either a surface or an inside of the fine elastomer particle is modified with at least either a carboxyl group or an acid anhydride group.

6. The cast insulation resin for an electric apparatus according to one of the preceding claims, wherein the fine elastomer particle has a particle size in a range between 2 to 2000 nm, and an added amount of the fine elastomer particle is in a range between 0.01 to 20 wt% of a total weight of the cast insulation resin.

7. The cast insulation resin for an electric apparatus according to one of the preceding claims, wherein a rate of the fine elastomer particles contacting each other is 20% or less of the fine elastomer particles contained totally.

8. The cast insulation resin for an electric apparatus according to one of the preceding claims, wherein the liquid elastomer has a polybutadiene skeleton, and the polar molecule of the liquid elastomer has an epoxy group or an acid anhydride group.

9. The cast insulation resin for an electric apparatus according to one of the preceding claims, wherein the inorganic compound is at least either silica or alumina having a particle size of 500 µm and less, and an added amount of the inorganic compound is in less than 85 wt% of a total weight of the cast insulation resin for an electric apparatus.

10. The cast insulation resin for an electric apparatus according to one of the preceding claims, wherein the organic molecule that modifies the surface of the inorganic compound is comprised of at least one group selected from an alkyl group, an acryl group, a methacryl group, a hydroxyl group, an acid anhydride group, a carboxyl group, and an alkoxy group.

11. The cast insulation resin for an electric apparatus according to one of the preceding claims, further comprising at least one material selected from a layered clay compound, a layered mica, and a super fine silica in addition to the fine elastomer particle and the inorganic compound.

12. A high voltage electric apparatus in which the cast insulation resin for an electric apparatus according to one of the preceding claims is used.
